Europäisches Patentamt

European Patent Office

Office européen des brevets

(19)

(11) Veröffentlichungsnummer: **0 346 516**
B.1

(12) **EUROPÄISCHE PATENTSCHRIFT**

(45) Veröffentlichungstag der Patentschrift: 30.01.91

(51) Int. Cl.⁵: **A 47 B 47/06,** F 16 B 12/22, A 47 F 5/11

(21) Anmeldenummer: 88109612.7

(22) Anmeldetag: 16.06.88

(54) **Regal mit Seitenwänden aus mehrlagigem Faltmaterial.**

(43) Veröffentlichungstag der Anmeldung:
20.12.89 Patentblatt 89/51

(45) Bekanntmachung des Hinweises auf die Patenterteilung:
30.01.91 Patentblatt 91/05

(84) Benannte Vertragsstaaten:
AT BE CH DE FR LI NL

(56) Entgegenhaltungen:
DE-C- 869 263
DE-U-8 712 389
DE-U-8 713 942
FR-A-2 109 202

(73) Patentinhaber: GUSTAV STABERNACK GMBH
Dirlammer Strasse 22
D-6420 Lauterbach/Hessen 1 (DE)

(72) Erfinder: Schmitt, Paul
Waldstrasse 31
D-6420 Lauterbach Hess. 1 (DE)

(74) Vertreter: Gudel, Diether, Dr. et al
Patentanwälte Dr. V. Schmied-Kowarzik Dipl.-Ing. G. Dannenberg Dr. P. Weinhold Dr. D. Gudel Dipl.-Ing. S. Schubert Dr. P. Barz Grosse Eschenheimer Strasse 39
D-6000 Frankfurt am Main 1 (DE)

Courier Press, Leamington Spa, England.

**Beschreibung**

Die Erfindung betrifft ein Regal mit Seitenwänden aus mehrlagigem Faltmaterial, mit denen Tragstangen lösbar verbunden sind, auf die Trays für die Aufnahme und Darbietung von Waren aufgesetzt sind.

Derartige Regale sind bekannt. Bei der Ausführungsform sind in den Seitenwänden Durchgangslöcher angebracht, in die die Tragstangen mit ihren Enden eingesteckt sind. Damit ist aber der Nachteil verbunden, daß die Außenseiten der Seitenwände durch die dort hindurchgesteckten Enden der Tragstangen optisch unterbrochen und gestört sind, so daß beispielsweise keine durchgehenden Werbeaufschriften dort angebracht werden können.

Die DE—U—8 713 942 beschreibt ein Regal mit mehrlagigen Seitenwänden, wobei die jeweils äußeren Lagen glatt durchgehend und ungestört sind. In den inneren Lagen der Seitenwände sind schlitzartige Öffnungen vorgesehen, in die Regalböden mit nach unten ragenden Laschen eingesteckt werden.

Die Erfindung vermeidet die erwähnten Nachteile. Ihr liegt die Aufgabe zugrunde, ein Regal mit den eingangs genannten Merkmalen vorzuschlagen, bei dem die Außenseiten der Seitenwände ungestört und nicht unterbrochen sind.

Zur lösung dieser Aufgabe ist die Erfindung dadurch gekennzeichnet, daß die jeweils äußeren Lagen der mehrlagigen Seitenwände glatt durchgehend und nicht unterbrochen sind, daß zumindest deren innerste Lage Durchgangslöcher zur Aufnahme der Enden der Tragstangen hat, daß zwischen dn Lagen ein Einsteckraum für nach unten weisende Ansätze an den Enden der Tragstangen ausgebildet sind und daß die Ansätze an Hülsen aus Kunststoffmaterial angeformt sind, die auf die Tragstangen aufgeschoben sind.

Die Tragstangen werden somit lediglich an den entsprechend profilierten Durchgangslöchern der inneren Lagen der Seitenwände gehalten, wobei die nach unten weisenden Ansätze an den Enden der Tragstangen, die in entsprechende Zwischenräume der mehrlagigen Seitenwände eingreifen, dafür sorgen, daß die Tragstangen aus den Durchgangslöchern nicht herausrutschen und somit richtig positioniert bleiben.

Bei einer bevorzugten Ausführungsform bestehen die eigentlichen Tragstangen aus Holzwerkstoff, weil dies billig ist.

Um die Hülsen an den eigentlichen Tragstangen unverlierbar zu befestigen, wird es bevorzugt, wenn an wenigstens einer Innenfläche der Hülse wenigstens eine nach innen weisende, rippenförmige Erhebung mit einer Auflaufkante ausgebildet ist. Die Erhebung nimmt Maßtoleranzen zwischen dem lichten Durchmesser der Hülse und dem Profil der Tragstange auf.

Alternativ oder zusätzlich kann in der Hülse zu demselben Zweck auch ein Durchgangsloch vorgesehen sein, so daß dann die Hülse über ein durch das Loch in das Material der Tragstange eingeschraubte Schraube dort richtig positioniert wird.

Die Erfindung wird im folgenden anhand eines Ausführungsbeispieles näher erläutert. Es zeigt:

Fig. 1 — in auseinandergezogener Darstellung einen Schnitt durch die linke Seitenwand eines erfindungsgemäßen Regals in einem Ausschnitt mit davor befindlichem Ende einer der Tragstangen;

Fig. 2 — eine Ansicht in Richtung des Pfeiles A von Fig. 1, wobei zusätzlich das betreffende Ende der Tragstange angedeutet ist;

Fig. 3 — in demgegenüber vergrößertem Maßstab eine Draufsicht auf die Hülse.

Es sei erwähnt, daß das Regal in seinem Grundaufbau herkömmlich konstruiert ist. Beispielsweise besteht es aus einem Fuß, einer Rückwand und zwei Seitnwänden, welche Teile bevorzugt aus Faltmaterial hergestellt sind.

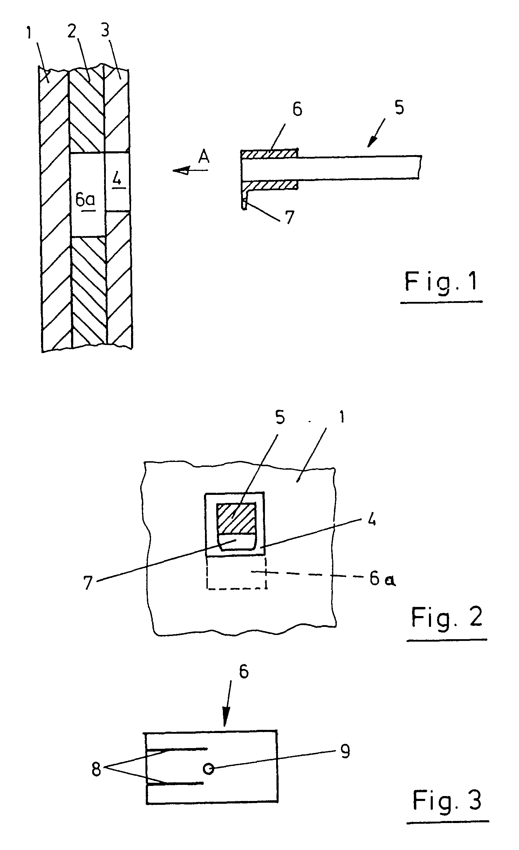

Fig. 1 zeigt eine der erfindungsgemäßen Seitenwände, die bei diesem Beispiel dreilagig ist. Sie besteht aus einer glatt durchgehenden Außenlage 1, einer Innenlage 3 und einer Zwischenlage 2.

In der Innenlage sind an vorbestimmten Stellen, nämlich dort, wo Tragstangen gehalten werden sollen, Löcher 4 angebracht zur Aufnahme der Enden der Tragstangen 5. An dieser Stelle weist auch die Zwischenlage 2 ein Loch 6a auf, welches etwas tiefer nach unten geführt ist als das davor befindliche Loch 4. Siehe auch Fig. 2.

Auf das betreffende Ende der Tragstange 5 ist eine Hülse 6 aufgeschoben, an deren äußeres Ende ein nach unten weisender Ansatz 7 angeformt ist. Die Abmessungen sind so getroffen, daß das betreffende Ende der Tragstange mitsamt der Hülse und dem Ansatz durch das Loch 4 in die Aufnahme 6a eingeschoben und dann abgesenkt werden kann, so daß die Hülse bzw. das Ende der Tragstange auf dem unteren Rand des Loches 4 aufruht und der Ansatz 7 sich im unteren Teil der Aufnahme 6 befindet, wodurch die Tragstange mit ihrem Ende dort verankert wird.

Fig. 3 läßt noch erkennen, daß die Hülse rippenförmige Auflaufkanten 8 haben kann, wodurch die Hülse trotz Fertigungstoleranzen und/oder eines Schwundes der aus Holzwerkstoff bestehenden Tragstange fest und in einem Paßsitz auf die Tragstange aufgeschoben werden kann. Zu diesem Zweck kann die Hülse auch ein Loch 9 haben, über die die Hülse an der Tragstange befestigt werden kann.

Üblicherweise sind im Regal jeweils eine vordere und eine hintere Tragstange, wie vorstehend beschrieben, auf demselbe Niveau vorgesehen, auf die dann ein Tray oder dergleichen aufgesetzt werden kann. Entsprechend viele dieser Tragstangenpaare sind auf unterschiedlichen Niveaus dann übereinander angeordnet zur Aufnahme einer entsprechenden Anzahle von Trays, die ebenfalls vorzugsweie aus Faltmaterial bestehen.

**Patentansprüche**

1. Regal mit Seitenwänden aus mehrlagigem Faltmaterial (1, 2, 3), mit denen Tragstangen (5) lösbar verbunden sind, auf die Trays für die Aufnahme und Darbietung von Waren aufgesetzt sind, dadurch gekennzeichnet, daß die jeweils äußeren Lagen (1) der mehrlagigen Seitenwände glatt durchgehend und nicht unterbrochen sind, daß zumindest deren innerste Lage (3) Durchgangslöcher (4) zur Aufnahme der Enden (6) der Tragstangen (5) hat, daß zwischen den Lagen (1, 3) ein Einsteckraum (6a) für nach unten weisende Ansätze (7) an den Enden der Tragstangen (5) ausgebildet sind und daß die Ansätze (7) an Hülsen (6) aus Kunststoffmaterial angeformt sind, die auf die Tragstangen (5) aufgeschoben sind.

2. Regal nach Anspruch 1, dadurch gekennzeichnet, daß die Tragstangen (5) aus Holzwerkstoff bestehen.

**Revendications**

1. Etagère comportant des parois latérales en matière pliable multicouche (1, 2, 3) auxquelles sont reliées en pouvant être libérées de tiges de support (5) sur lesquelles sont exposés des plateaux pour recevoir et présenter des produits, caractérisé en ce que, les couches respectivement extérieures (1) des parois latérales multicouches sont lisses de bout en bout et ne sont pas interrompues, en ce qu'au moins leur couche la plus intérieure (3) présente des trous traversants (4) pour recevoir les extrémités (6) des tiges de support (5), en ce qu'un espace d'enfoncement (6a) destiné à des appendices tournés vers le bas (7) aux extrémités des tiges de support (5) sont ménagés entre les couches (1, 3) et en ce que les appendices (7) sont formés sur des douilles (6) en matière plastique qui sont glissées sur les tiges de support (5).

2. Etagère selon la revendication 1, caractérisé en ce que, les tiges de support (5) sont en un matériau dérivé du bois.

**Claims**

1. Shelf with side walls made of multilayer folding material (1, 2, 3) to which supporting bars (5) are detachably connected onto which trays for the reception and representation of goods are set up, characterized in that each of the outer layers (1) of the multilayer side walls are smoothly continuous and are not interrupted, that at least the innermost layer (3) is provided with through holes (4) for receiving the ends (6) of the supporting bars (5), that between the layers (1, 3) an inserting space (6a) is provided for extensions (7) in downward direction at the ends of the supporting bars (5), and that the extensions (7) are formed at sockets (6) made of artificial resin material which are pushed onto the supporting bars (5).

2. Shelf according to claim 1, characterized in that the supporting bars are produced from timber work material.

Fig. 1

Fig. 2

Fig. 3